# EUROPEAN PATENT APPLICATION

(11) **EP 4 686 976 A1**
(43) Date of publication of application: **04.02.2026**
(21) Application number: 24192118.8
(22) Date of filing: 31.07.2024
(51) Int. Cl.: G02B 21/32

(54) **ADAPTER FOR FORMING OPTICAL TWEEZERS CONNECTABLE TO A MICROSCOPE**

(71) Applicant: Ustav Pristrojove Techniky AV CR, V.V.I., 61200 Brno (CZ)
(72) Inventor: Silhan, Lukas, 68323 Ivanovice na Hané (CZ); Sery, Mojmir, 62300 Brno (CZ); Zemanek, Pavel, 67401 Trebic (CZ); Lazar, Josef, 61200 Brno (CZ)
(74) Representative: Zemanová, Veronika

(57) **Abstract**

Adapter for forming optical tweezers connectable to a microscope, comprising:
- a housing (1) comprising a cavity into which openings open, said openings being an opening for optical connection with an objective, an opening for optical connection with the body of a microscope arranged opposite to it, and a side opening arranged in a side wall of the housing (1),
- a carrier (6) arranged in the cavity of the housing (1),
- a supporting body (3) with a cylindrical through-cavity, wherein an open end of the cavity of the supporting body (3) opens into the side opening of the housing (1), and the other is adapted for insertion of an ending of an optical fibre (32),
- and a collimating assembly arranged in the supporting body (3) slidably in the direction of the axis of the cylindrical cavity,
wherein an optical prism (7) is attached to the carrier (6) in the cavity of the housing (1), the optical prism (7) facing the collimating assembly with its reflective surface to reflect at least a part of a light beam collimated by the collimating assembly into the region of the opening for optical connection with an objective.

## Description

### Field of the Invention

The invention relates to an adapter for forming optical tweezers, the adapter being easily connectable and/or disconnectable between a microscope objective and a microscope body, and enabling use of every advantage of the optical tweezers and simultaneously maintaining most of original functions of the microscope.

### Background Art

Over the course of past decades, a considerable development of Raman spectroscopy has taken place, using both commercially available and laboratory-built devices. The Raman device alone does not allow for usage of optical tweezers.

Optical tweezers serve for manipulation and fixation of small objects, such as cells, by means of a focused beam of light.

Czech utility model no. 33320 discloses an adapter which enables combining the functions of a microscope and optical tweezers.

The aim of the invention is to improve such an adapter with regards to optical parameters as well as with regards to facilitation of manipulation and usage.

### Summary of the Invention

The above-mentioned task is accomplished by an adapter for forming optical tweezers, said adapter being connectable to a microscope and comprising:
- a housing comprising a cavity into which openings open, the openings being an opening for optical connection with an objective, an opening arranged opposite thereto for optical connection with a body of a microscope, and an opening arranged in a side wall of the housing,
- a carrier arranged in the cavity of the housing,
- a supporting body comprising a cylindrical through-cavity, wherein one open end of the supporting body ends in the side opening of the housing and the other is adapted to enable insertion of an end piece of an optical fibre,
- and a collimating assembly arranged in the supporting body slidably in the direction of an axis of the cylindrical cavity,
wherein an optical prism is attached to the carrier in the cavity of the housing, said optical prism facing the collimating assembly with its reflecting surface for reflecting at least a part of a radiation beam collimated by the collimating assembly to the region of the opening for optical connection with the objective.

The carrier preferably comprises a supporting surface provided with at least one positioning arm for defining a placement of the optical prism on the supporting surface, and with at least one recess for glue with which the optical prism is fixed to the supporting surface.

Within the housing, the carrier is preferably suspended on at least one supporting screw, which extends through a side wall of the housing and is screwed into the carrier, wherein adjusting screws are screwed through the side wall of the housing, the heads of the adjusting screw being operable from an outer side of the housing, whereas distal ends of shanks press against the carrier for adjusting the position of the carrier by the extent to which the adjusting screws are screwed.

In a preferred embodiment, at least one bronze socket extends through the side wall of the housing, the bronze socket being provided with an internal thread in which the adjusting screw is screwed.

The adapter preferably comprises three adjusting screws, wherein the carrier is provided with seating elements arranged to contact with distal ends of the shanks of the adjusting screws.

One of the seating elements preferably comprises a cones-shaped recess, the second seating element comprises a linear groove with a V-shaped cross section and the third seating element is a planar surface perpendicular to the axis of the shank of the respective adjusting screw.

In a preferred embodiment, the adapter also comprises a holder in which the supporting body is disposed with its end facing the housing, wherein the holder is suspended on the housing on at least one supporting screw, the supporting screw extending through the holder and being screwed into the side wall of the housing, wherein adjusting screws are screwed through the holder, the distal ends of the adjusting screws pressing against the housing.

An outer surface of an end of the supporting body which is disposed in a main through-opening of the carrier preferably partially adjoins to the inner surface of the main through-opening of the holder and is provided with a groove into which an end of a shank of a screw projects, said screw being tightened through a supplementary through-opening of the holder.

The optical prism preferably comprises a pair of glass prisms having a base in the shape of an isosceles right triangle, said glass prisms being placed adjacent to each other with their largest surfaces.

The glass prisms are preferably glued to each other, wherein preferably at least one dielectric layer is arranged between said prisms, most preferably a group of layers, wherein the thickness of each dielectric layer is preferably lower than 1 micrometre.

The axis of the collimating assembly preferably forms an angle of essentially 45 degrees with the reflecting surface of the optical prism.

The adapter preferably comprises a regulating assembly for moving the collimating assembly in a direction towards the optical prism and away from it, wherein said regulating assembly comprises
- a driving element partially surrounding the carrier body,
- a connecting element for a mutual immovable connection of the driving element with the collimating assembly when the adapter is in an assembled state, wherein the connecting element projects into an opening in a side wall of the collimating assembly with its one end, passes through the linear groove and is attached relative to the driving element, and
- a differential component partially surrounding the supporting body, said differential component comprising a first thread which engages with a thread on the surface of the supporting body, and a second thread which engages with a thread of the driving element, wherein the first thread has a pitch which is different from the pitch of the second thread.

In a preferred embodiment, when the regulating assembly is in an assembled state, the connecting element is immovable relative to the driving element, wherein the connecting element is preferably a connecting screw, the head of which is disposed in the driving element and the shank of which is screwed into the wall of the collimating assembly.

The first thread of the differential component is preferably an internal thread arranged on an inner collar and the second thread is an external thread, wherein the pitch of the second thread is preferably 1.2 to 3 times, preferably 1.3 to 2 times the pitch of the first thread.

The driving element preferably comprises an auxiliary ring, the inner surface of which is adjacent to the outer surface of the supporting body, and a regulating ring, a part of the inner surface of which surrounds the outer surface of the auxiliary ring and another part of the surface is provided with a thread, said thread engaging the second thread of the supporting body.

### Description of Drawings

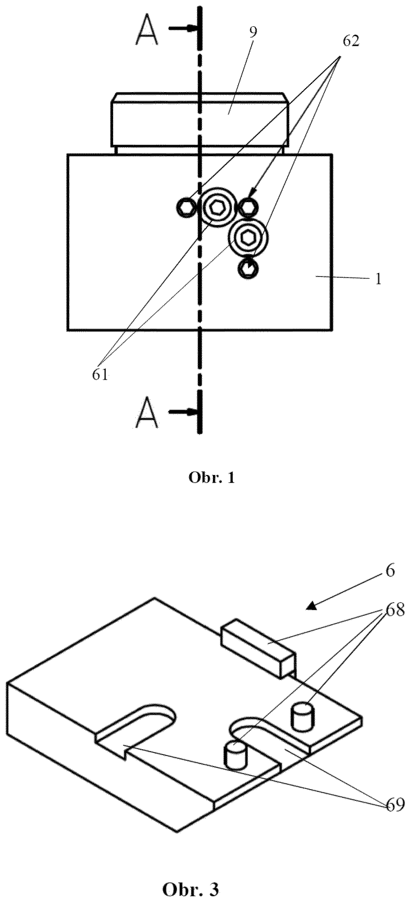

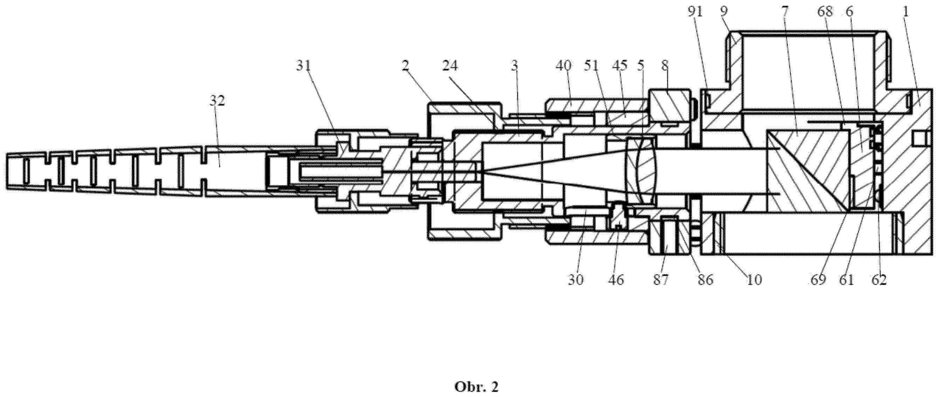

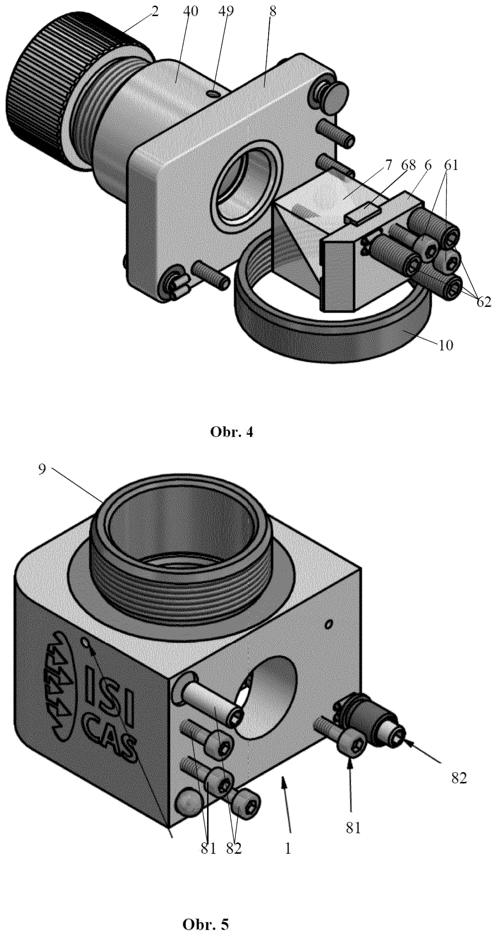

The invention is further described by means of an exemplifying embodiment illustrated in drawings, wherein Fig. 1 shows a side view of the exemplifying embodiment of the adapter, Fig. 2 is a section A-A through the adapter of Fig. 1, Fig. 3 shows a view of the carrier, Fig. 4 shows a view of a partially exploded view of the adapter assembly and Fig. 5 is a view of the housing with a fixating component.

### Description of Embodiments

The embodiment of the adapter for forming optical tweezers shown in the drawings, the adapter being connectable to a Raman microscope or to another type of microscope, comprises a housing 1 which is adapted to be fixed to an optical microscope body (not shown) on one side and to a microscope objective on the other side.

In this exemplifying embodiment, a socket 10 having an internal thread is pressed-fitted into the housing 1, wherein an objective can be screwed into said internal thread.

At the side facing away from the socket 10, the housing 1 is provided with a fixating component 9 for fixing the housing 1 to the optical microscope body, said fixating component 9 having an essentially tubular shape. At its first end, the fixating component 9 is provided with a flange comprising a circumferential groove 91, and at its other end, the fixating component 9 is provided with an external thread for screwing into the microscope body. The first end of the fixating component 9, i.e. said flange, has an outer diameter which corresponds to an inlet inner diameter of an opening for connection with the microscope body provided with an internal step in a cavity of the housing 1, so that in an assembled state, an end wall of the flange of the fixating component 9 abuts against a radial surface of the internal step and a circumferential sidewall of the flange abuts on a side wall in the inlet region of said opening.

The fixating component 9 is retained within the housing 1 by means of a holding screw which extends through an opening 12 in the wall of the housing 1, preferably a threaded opening, and extends into the circumferential groove 91 in the flange of the fixating component 9. Consequently, the adapter can be attached to the optical microscope body by screwing the fixating component 9 to the optical microscope body, and only after that is the housing 1 along with the other components of the adapter mounted to the first end of the fixating component 9 and attached by means of the holding screw which is screwed in the opening 12. When fixating the adapter to the microscope body, it is thus not necessary to turn the entire adapter in a usually narrow space, but it is sufficient to screw the relatively small fixating component 9 and place a remaining part of the adapter on it in a desired position and without a need for turning. If adjustment of the position of the laser tweezers relative to the microscope body is needed, it is sufficient to slightly loosen the holder screw, turn the housing 1 in the fixating body 9 while the vertical position of an axis of the housing 1, or rather the coaxial position of the housing 1 and the objective is maintained, and subsequently tighten the holder screw again.

A carrier 6 carrying an optical prism 7 is arranged in the cavity of the housing 1. The carrier 6 has a supporting surface with positioning arms 68 protruding from it, the positioning arms 68 defining the arrangement of the optical prism 7 on the supporting surface. The supporting surface is simultaneously provided with recesses 69, into which glue connecting the optical prism 7 with the carrier 6 is applied.

The optical prism 7 is adapted and arranged so that the laser radiation brought through a through-opening in a side wall of the housing 1 is reflected into the objective, or rather into the opening of the socket 10 for connection with the objective, by a reflective surface of the optical prism 7, and the radiation brought through the objective onto the optical prism 7 is transmitted into the microscope body. The optical prism 7 is made of optical glass, preferably with a pyramidal error, i.e. a deviation of the angle formed by the reflective surface and the base of the optical prism 7, lower than 3 angular minutes.

In this disclosure, the term "optical prism 7", also called a beam splitter, has the meaning of an optical element which splits the beam into a transmitted and a reflected beam. In the present example of use, the optical prism 7 is a cube made by gluing two isosceles-triangle-shaped glass prisms together. In a preferred embodiment, the hypotenuse, i.e. the largest surface of one of the glued prisms is provided with at least one dielectric layer, preferably with a dielectric multilayer, so that a maximum reflection of the laser beam from a collimating assembly to the microscope objective takes place on said dielectric layer. There are several advantages of using the optical prism 7. One of the advantages is a higher flatness of the surface of the cathetus of the triangular prism in comparison with a dichroic mirror having the same size as the length of the cathetus of the prism. Another advantage is that the optical axis of the image-creating light beam of the microscope is preserved. Yet another advantage of using the optical prism 7 is its shorter axial length, because it is not necessary to use a compensatory glass plate for preserving the axis of the image-creating light beam of the microscope.

The dielectric multilayer is a sandwich structure of thin layers made of a dielectric material (non-conducting material), wherein the thickness of a single layer is typically lower than 1 micrometer. The material of the layers may be diverse, in most cases it is SiO₂ and TiO₂. The layers are deposited e.g. by vacuum or magnetron sputtering. A typical property of the layer or the multilayer is a defined reflectivity of the entire incident radiation or of a part of it.

In conventional microscopic technologies, the flatness of the inserted plane parallel components is not a critically important parameter. The principle of optical tweezers utilizes a strong focusing of a laser beam, and correct function of optical tweezers, is based on providing lowest possible spatial size of the focal point, wherein minimum distortion of the wavefront of the reflected laser beam is of great importance. The dichroic mirror, which is a plan parallel plate inserted into the adapter, can only satisfy this requirement when its thickness corresponds to more than at least one sixth of its diameter, because of production reasons. Furthermore, it is necessary to provide the dichroic mirror with a compensating glass plate, which leads to a large axial length of the adapter. When the optical prism 7 is used, a compensating glass plate is not required because the optical prism 7 does not cause a side deviation of the optical axis of the laser beam. The height of the optical prism measured in the direction of the axis of the opening for optical connection with objective should be equal to or larger than at least the diameter of the rear entry aperture of the microscope objective to avoid cropping of the observed image and decreasing the numerical aperture of the focused laser beam, thereby enlarging the volume size of the focused trace of the laser beam. In a less preferred alternative embodiment, the optical prism 7 may be replaced with a dichroic mirror which represents an alternative reflecting element for reflection of the collimated beam to the direction parallel to the axis of the objective, or rather the socket 10. However, the optical prism allows for reaching a higher quality of the reflected wavefront of the laser radiation.

The carrier 6 is attached inside the cavity of the housing 1 to the inner wall of the housing 1 by means of two supporting screws 61 which extend through the side wall of the housing 1 and project into the material of the carrier 6 on a side facing away from the supporting surface. An exact position of the carrier 6 inside the housing 1 is adjustable by means of three adjusting screws 62 which are screwed through the wall of the housing 1 and press with their ends against the carrier 6 or a bearing part on the carrier 6. A larger or smaller extent of screwing of the adjusting screws 62 will cause the carrier 6 to be pushed away in a larger or smaller extent from the wall of the housing 1, which results in tilting of the carrier 6 with the optical prism 7. The housing 1 is preferably provided with a bronze insert having an internal thread, such insert(s) being provided for at least one, preferably two adjusting screws 62, which results in a more precise disposition and guiding of the adjusting screws 62. By contrast, the supporting screws 61 are disposed in the housing 1 with a larger clearance than the adjusting screws 62 to allow the above-mentioned positioning.

The carrier 6 may be provided with seating elements arranged for contact with distal ends of the shanks of the adjusting screws 62. One of the seating elements can be e.g. in the form of a cone-shaped recess in the wall of the carrier 6 and a respective adjusting screw 62 fits with the distal end of its shank in this cone-shaped recess, wherein during setting the position of the carrier 6, it allows for rotating and tilting movement with respect to the axis of the cone shaped recess. Another of the seating elements may be for instance in the form of a pair of projections, which delimit a linear groove between them, wherein a section perpendicular to the linear groove may have approximately a V form. The respective adjusting screw 62 reaches with its distal end into the linear groove and - during setting the position of the carrier 6 - it allows for a movement within the above-mentioned linear groove. The third of the seating elements may be a planar surface against which a respective adjusting screw 62 abuts by the distal end of its shank.

The above-described arrangement of the carrier 6 enables a precise setting and fixation of position of the optical prism 7 in the housing 1.

The side wall of the housing 1 is provided with a lateral through-opening, said through-opening being arranged opposite relative to the carrier 6 with the optical prism 7.

The adapter comprises a supporting body 3 comprising a cylindrical longitudinal cavity which, at its end facing the optical prism 7, opens into the lateral through-opening in the side wall of the housing 1, and is open at its other end for receiving an outlet optical end of a connector 31 of an optical fiber 32.

The optical fiber 3 may be e.g. a single-mode type fiber and may be connected by means of a FC/PC connector.

The axis of the cylindrical cavity of the supporting body 3 is essentially or approximately perpendicular to the axis of the cavity of the housing 1, or rather of the fixating component 9, or of the socket 10.

The supporting body 3 may be made e.g. of invar.

The wall of the supporting body 3 is provided with a linear slot 30 which extends in parallel to the longitudinal axis of the inner cavity of the supporting body 3.

A collimating assembly is slidably and coaxially arranged within the supporting body 3, wherein said collimating assembly in the present embodiment comprises a tube 51 in which a pair of lenses 5 forming a doublet is coaxially arranged. A side wall of the tube 51 comprises a threaded operating opening for engagement with a connecting screw 46.

The supporting body 3 is, at its outer side, provided with a regulating assembly for moving the collimating assembly towards the optical prism 7 and away from it.

The regulating assembly comprises a connecting screw 46, a regulating ring 40, an auxiliary ring 45 and a differential component 2.

The auxiliary ring 45 surrounds a portion of the supporting body 3 and is provided with a radially extending through-opening, through which a shank of the connecting screw 46 is introduced through the linear groove 30 of the supporting body 3 and into the threaded opening in the tube 51. The width of the linear groove 30 corresponds to the diameter of the connecting screw 46 with a clearance.

The differential component 2 surrounds a portion of the outer region of the supporting body 3 and comprises an inner collar 24 comprising a first thread which engages with an external thread of the supporting body 3, and an outer circumference with a second thread.

In this particular embodiment, the first thread is an internal thread of the type M10x0.5 and the second thread is an external thread of the type M14x0.75. Other types of threads can be used for the first and the second thread, but the first thread has a pitch which is smaller than the pitch of the second thread. In general terms, the pitch of the second thread is preferably 1.2 to 3 times the pitch of the first thread, more preferably 1.3 to 2 times the pitch of the first thread. The pitch of the first thread is preferably 0.2 to 1.5 mm, more preferably 0.3 to 0.8 mm, most preferably 0.4 to 0.6 mm.

In this adapter, the first thread and the second thread are configured so that, when the differential component 2 is being turned, the differential component 2 moves along the axis of the supporting body 3 in one direction and the driving assembly moves in the same direction but slower, thereby moving in the opposite direction relative to the differential component 2 along the axis of the supporting body 3.

In an alternative embodiment, the first thread has a larger pitch than the second thread so that, when the differential component 2 is being turned, the differential component 2 moves in the direction of its axis slower than the driving assembly.

The auxiliary ring 45 is surrounded by a regulating ring 40 and they're mutually connected by a radial pin or screw (not shown), arranged in the opening 49, or in another way, preferably so that they can be disassembled.

In the longitudinal direction, i.e. in the direction of their axis, the regulating ring 40 extends beyond the auxiliary ring 45, wherein the regulating ring is provided with an internal thread in the region of extending beyond the auxiliary ring 45, said internal thread engaging with the second thread of the differential component 2. The auxiliary ring 45 is connected to the regulating ring 40 and together they form a driving element for moving the connecting screw 46, wherein the movement of the connecting screw 46 is carried out by turning the differential component 2 in the thread of the regulating ring 40 and, in doing so, the movement of the connecting screw 46 is guided by the linear groove 30. In an alternative embodiment, the driving element is made of one piece, wherein the wall of the driving element is provided with a radial through-opening for screwing the connecting screw 46.

In an alternative embodiment, the connecting screw 46 is replaced by a connecting pin or by another connecting element which can be fixed so that in an assembled state, it is immovable relative to the collimating assembly and to the driving element.

Thanks to the above-described regulating assembly, it is possible to easily and very precisely regulate the movement of the collimating assembly in the supporting body 3. At the same time, a high rigidity of the regulating assembly is achieved.

The supporting body 3 is connected to the side wall of the housing 1 by means of a holder 8 such that its inner through-opening adjoins the lateral through-opening in the side wall of the housing 1. In the present embodiment, the holder 8 is in the form of a plate with a main through-opening for inserting an end of the supporting body 3 and it is provided with a supplementary threaded opening 87, the axis of which being perpendicular to the axis of the through-opening of the holder 8. The outer wall of the end of the supporting body 3 inserted into the main through-opening adjoins to the inner wall of the through-opening of the holder 8 and is provided with a groove 86, into which a distal end of a shank of a (not-shown) screw projects, said screw being screwed in the supplementary threaded opening 87, thereby securing the attachment of the supporting body 3 in the holder 8. The holder 8 is fixed to the wall of the housing 1 by means of a group of supporting screws 81 extending through the holder 8 and into the side wall of the housing 1, and by means of adjusting screws 82 which engage with respective threads of threaded through-openings of the holder 8 and which press with their ends against the wall of the housing or against a bearing part at the side of the housing. Thus, a precise position of the holder 8 relative to the wall of the housing 1 can be set by means of adjusting screws 82, wherein a larger or smaller extent of screwing of the adjusting screws 62 will cause the respective region of the holder 8 to be pushed away to a larger or smaller extent from the wall of the housing 1, thereby causing also a slight tilting of the holder 8 along with the supporting body 3 and with an end of the optical fibre 3 arranged therein and with the collimating assembly. The holder 8 is preferably provided with a bronze insert comprising an internal thread, such insert(s) being provided for at least one, preferably at least two adjusting screws 82, which results in a more precise disposition and guiding of the adjusting screws 82. The supporting screws 81 are, on the contrary, arranged with a larger clearance than the adjusting screws 82 to enable the above-described positioning using the adjusting screws 82.

Similarly to the carrier 6, the holder 8 may be also provided with seating elements arranged for contact with distal ends of the shanks of the adjusting screws 82. One of the seating elements may be e.g. in the form of a cone-shaped recess of the wall of the holder 8 and a respective adjusting screw 82 fits in this cone-shaped recess with the distal end of its shank, wherein during setting the position of the holder 8 relative to the housing 1, it enables turning and tilting it relative to the axis of the cone-shaped recess. A second seating element can be e.g. in the form of two projections which define a linear groove between them, wherein the groove is approximately V-shaped in a cross-section perpendicular to the axis of the groove. A respective adjusting screw 82 fits into this groove with the distal end of its shank and, during positioning of the holder 8 relative to the housing 1, it enables movement in the above-mentioned groove. The third seating element is a planar surface against which a respective adjusting screw abuts with the end of its shank.

The connector 31, the supporting body 2, the differential component and the tube 51 with a pair of lenses 5 are arranged in a mutually coaxial manner. Thanks to the above-described disposition of the holder 8, it is possible to very precisely set, eventually also fix, the position of the axis of the beam brought from the optical fibre 2 into the cavity of the housing 1, or rather relative to the optical prism 7 within the cavity of the housing 1.

The radiation which propagates from the optical fibre 3 passes through the cavity of the supporting body 2, is collimated by the lenses 5 and the collimated beam is brought to the optical prism 7 in the cavity of the housing 1.

After being reflected on the reflecting surface of the optical prism 7, the beam propagates to the rear aperture of the microscope objective in the direction of its optical axis. After the beam traverses the microscope objective, the radiation beam is focused into a diffraction-limited trace in the focal plane of the microscope objective.

The adapter according to this invention enables an easy introduction of a supplementary radiation beam into a microscope which, during its production, was not adapted for this purpose. The described adapter may be readily connected to and disconnected from most of available microscopes and may be used in these microscopes for laser micromanipulation with low purchase costs.

The present invention thus relates to an adapter which can be easily connected, eventually disconnected, between the microscope objective and the microscope body, and allows for exploiting all advantages of optical tweezers while maintaining most of the original functions of the microscope. The advantages of this adapter are: its very small dimensions, an easy handling and simultaneously a very precise adjustability and a reliable fixability of axes, particularly of the axis of the supplied beam relative to the axis of the objective and of the axis of the beam reflected from the reflective surface of the optical prism 7.

### Industrial Applicability

The device according to the invention can be used for an optional extension of features of various types of microscopes, e.g. when a modular extension of the device for Raman spectroscopy with optical trapping for handling and fixation of small objects, for example cells, and thus also an improvement of possibilities of its application particularly in biology and medicine, is desirable.

## Claims

1. Adapter for forming optical tweezers connectable to a microscope, comprising:
- a housing (1) comprising a cavity and openings, which open into the cavity, said openings being an opening for optical connection with an objective, opposite to that opening an opening for optical connection with a body of a microscope, and a side opening arranged in a side wall of the housing (1),
- a carrier (6) arranged in the cavity of the housing (1),
- a supporting body (3) with a cylindrical through-cavity, wherein an open end of the cavity of the supporting body (3) opens into the side opening of the housing (1), and the other is adapted for insertion of an ending of an optical fibre (32),
- and a collimating assembly arranged in the supporting body (3) slidably in the direction of the axis of the cylindrical cavity,
**characterised in that** an optical prism (7) is attached to the carrier (6) in the cavity of the housing (1), the optical prism (7) facing the collimating assembly with its reflective surface to reflect at least a part of a light beam collimated by the collimating assembly into the region of the opening for optical connection with an objective.

2. Adapter according to claim 1, **characterised in that** the carrier (6) has a supporting surface provided with at least one positioning arm (68) for defining a position of the optical prism (7) on the supporting surface, and with at least one recess (69) for glue by means of which the optical prism (7) is fixed to the supporting surface of the carrier (6).

3. Adapter according to claim 1 or 2, **characterised in that** the carrier (6) is suspended within the housing (1) on at least one supporting screw (61) which extends through the side wall of the housing (1) and is screwed in the carrier (6), wherein adjusting screws (62) are screwed through the side wall of the housing (1), heads of said adjusting screws (62) being operable from an outer side of the housing (1), while distal ends of their shanks press against the carrier (6) for adjusting the position of the carrier (6) by the extent to which the adjusting screws (62) are screwed.

4. Adapter according to claim 3, **characterised in that** at least one bronze socket comprising an internal thread extends through the side wall of the housing (1), said adjusting screw (62) being screwed in said bronze socket.

5. Adapter according to claim 3 or 4, **characterised in that** it comprises three adjusting screws (62), wherein the carrier (6) is provided with seating elements arranged for a contact with distal ends of the shanks of the adjusting screws (62).

6. Adapter according to claim 5, **characterised in that** one of the seating elements comprises a cone-shaped recess, the second of the seating elements comprises a linear groove having a V-shaped cross-section, and the third of the seating elements is a planar surface perpendicular to the axis of the shank of a respective adjusting screw (62).

7. Adapter according to any one of claims 1 to 6, **characterised in that** it comprises a holder (8), in which the supporting body is arranged with its end facing the housing (1), wherein the holder (8) is suspended on the housing (1) on at least one supporting screw (81) which extends through the holder (8) and is screwed into the side wall of the housing (1), wherein adjusting screws (82) are screwed through the holder (8), distal ends of their shanks pressing against the housing (1).

8. Adapter according to claim 7, **characterised in that** an outer surface of an end of the supporting body (3) which is disposed in a main through-opening of the holder (8) partially adjoins to an inner surface of the main through-opening of the holder (8) and is provided with a groove (86) into which an end of a shank of a screw projects, said screw being screwed through a supplementary through-opening (87) of the holder (8).

9. Adapter according to any one of claims 1 to 8, **characterised in that** the optical prism (7) comprises a pair of glass prisms having bases in the shape of an isosceles right triangle, said glass prisms facing each other with their largest surfaces.

10. Adapter according to claim 9, **characterised in that** the glass prisms are glued to each other and/or a dielectric layer, preferably a group of dielectric layers, is arranged between them, wherein the thickness of each of the dielectric layers is preferably smaller than 1 micrometre.

11. Adapter according to any one of claims 1 to 10, **characterised in that** the axis of the collimating assembly forms an angle of 45° with the reflective surface of the optical prism (7) and/or the axis of the opening for optical connection with an objective forms and angle of 45° with the reflective surface of the optical prism (7).

12. Adapter according to any one of claims 7 to 11, **characterised in that** it comprises a regulating assembly for moving the collimating assembly within the supporting body (3) in a direction towards the optical prism (7) and away from it, wherein the regulating assembly comprises:
- a driving element which partially surrounds the supporting body (3),
- a connecting element for a mutually immovable connection of the driving element and the collimating assembly, when the adapter is in an assembled state, wherein the connecting element, with its one end, projects into an opening in a side wall of the collimating assembly, extends through the linear groove (30) and is attached relative to the connecting element, and
- a differential component (2) partially surrounding the supporting body (3) and comprising a first thread, which engages with a thread on a surface of the supporting body (3), and a second thread, which engages with a thread of the driving element, wherein the first thread has a pitch which is different from the pitch of the second thread.

13. Adapter according to claim 12, **characterised in that** in the assembled state of the regulating assembly, the connecting element is immovable relative to the driving element, wherein the connecting element is preferably a connecting screw (46), wherein its head is arranged in the driving element and the end of its shank is screwed in the wall of the collimating assembly.

14. Adapter according to any one of claims 12 to 13, **characterised in that** the first thread of the differential component (2) is an internal thread arranged on an inner collar and the second thread is an external thread, wherein the pitch of the second thread is equal to 1.2 to 3 times, preferably 1.3 to 2 times the pitch of the first thread.

15. Adapter according to any one of claims 12 to 14, **characterised in that** the driving element comprises an auxiliary ring (45), an inner surface of which adjoins to the outer surface of the supporting body (3), and a regulating ring (40), a part of the inner surface of which surrounds the outer surface of the auxiliary ring (46) and another part of the surface is provided with a thread which is in engagement with the second thread of the supporting body (3).
